# FASCICULE DE BREVET EUROPEEN

(11) **EP 4 269 964 B1**
(45) Date de publication et mention de la délivrance du brevet: **31.12.2025**
(21) Numéro de dépôt: 23170187.1
(22) Date de dépôt: 26.04.2023
(51) Int. Cl.: G01J 3/443, G01J 3/18, G01J 3/02, G01J 3/36, G01N 21/62

(54) **APPAREIL ET PROCÉDÉ DE SPECTROMÉTRIE DE DÉCHARGE LUMINESCENTE À HAUTE RÉSOLUTION SPECTRALE ET TEMPORELLE**
VORRICHTUNG UND VERFAHREN FÜR GLIMMENTLADUNGSSPEKTROMETRIE MIT HOHER SPEKTRALER UND ZEITLICHER AUFLÖSUNG
APPARATUS AND METHOD FOR HIGH SPECTRAL AND TEMPORAL RESOLUTION GLOW DISCHARGE SPECTROMETRY

(30) Priorité: 29.04.2022 FR 2204104
(43) Date de publication de la demande: 01.11.2023
(73) Titulaire: Horiba France SAS, 91120 Palaiseau (FR)
(72) Inventeur: CHAPON, Patrick, 91140 Villebon Sur Yvette (FR)
(74) Mandataire: Jacobacci Coralis Harle

(56) Documents cités:
- FR-A1- 3 020 684
- US-A1- 2018 259 393
- US-B2- 10 746 598
- US-B2- 7 936 455
- MICLEA M ET AL: "Diagnostics and application of the microhollow cathode discharge as an analytical plasma; Diagnostics and application of the microhollow cathode discharge", JOURNAL OF PHYSICS D: APPLIED PHYSICS, INSTITUTE OF PHYSICS PUBLISHING, BRISTOL, GB, vol. 38, no. 11, 7 June 2005 (2005-06-07), pages 1709 - 1715, XP020083127, ISSN: 0022-3727, DOI: 10.1088/0022-3727/38/11/011
- POR�ZKA PAVEL ET AL: "Multivariate classification of echellograms: a new perspective in Laser-Induced Breakdown Spectroscopy analysis", vol. 7, no. 1, 9 June 2017 (2017-06-09), XP093003192, Retrieved from the Internet <URL:http://www.nature.com/articles/s41598-017-03426-0> DOI: 10.1038/s41598-017-03426-0

## Description

### Domaine technique

La présente invention se rapporte aux dispositifs et procédés d'analyse d'échantillons solides par spectrométrie de décharge luminescente.

### Technique antérieure

La spectrométrie de décharge luminescente (SDL ou GDS pour glow discharge spectrometry) est une technique d'analyse qui permet de mesurer la composition chimique élémentaire et/ou moléculaire d'échantillons solides homogènes ou multicouches. La mesure peut se faire à cœur ou être résolue en profondeur. En outre, on distingue les dispositifs ou sources à décharge luminescente qui permettent l'analyse d'échantillons solides par spectrométrie de masse (GD-MS pour glow discharge mass spectrometry) ou par spectrométrie optique d'émission (GD-OES pour glow discharge optical emission spectrometry).

Le principe de la spectrométrie de décharge luminescente consiste à éroder une surface d'un échantillon par plasma, puis à exciter et/ou ioniser les espèces chimiques érodées et à détecter les espèces ionisées par spectrométrie de masse, ou respectivement les espèces excitées par spectrométrie optique d'émission, pour en déduire la composition de l'échantillon. Un gaz, dit gaz de plasma, est injecté dans l'enceinte à vide d'une lampe à décharge et une puissance électrique est appliquée entre les électrodes de la lampe pour générer un plasma. Le gaz de plasma est généralement un gaz inerte tel que de l'argon, du néon, du krypton ou de l'hélium. Le gaz de plasma peut aussi être formé d'un mélange de gaz, par exemple un mélange d'argon et d'un autre gaz tel que l'oxygène, l'hydrogène, l'azote ou l'hélium. La surface de l'échantillon placé dans l'enceinte à vide de la lampe est ainsi exposée à un plasma d'ablation. Ce plasma assure à la fois l'érosion du matériau solide à analyser ainsi que l'excitation et/ou l'ionisation des espèces érodées en phase gazeuse. Un spectromètre de masse ou un spectromètre d'émission optique, couplé à l'enceinte à vide, permet d'analyser les espèces chimiques présentes dans le plasma. En fonction de la durée d'érosion, la GDS permet une analyse quantitative de certains échantillons résolue en profondeur, fournissant ainsi un profil de composition de l'échantillon analysé.

La GDS est relativement simple d'utilisation et a des applications variées. Elle permet l'analyse d'éléments présents sous forme de traces, mineurs et majeurs dans des échantillons solides métalliques ou non métalliques. La spectrométrie de décharge luminescente (SDL ou GDS) permet l'analyse de la composition chimique de matériaux solides à cœur (bulk) mais aussi en fonction de la profondeur (depth profile). La capacité d'obtenir des profils en profondeur est clairement ce qui distingue la SDL d'autres techniques d'analyse élémentaire tels que la spectrométrie étincelle, la spectroscopie d'émission de plasma induit par laser (LIBS pour Laser Induced Breakdown Spectroscopy) ou encore la fluorescence de rayons X.

Les montages optiques utilisés dans les appareils commercialisés en SDL (ou GDS) reposent en général sur l'utilisation d'un polychromateur en montage Paschen-Runge associé à des détecteurs photomultiplicateurs (PM) pour acquérir le signal à plusieurs longueurs d'onde et/ou à une série de détecteurs CCD disposés pour acquérir chacun une partie du spectre.

Toutefois, l'intensité des signaux en SDL est beaucoup plus faible qu'en LIBS. Pour effectuer en SDL des mesures de profil avec une résolution spatiale en profondeur élevée, il est nécessaire d'utiliser des détecteurs PM qui permettent d'obtenir à la fois une haute sensibilité et une vitesse d'acquisition élevée. Toutefois, les détecteurs PM sont fixes et ne permettent pas une acquisition sur tout le spectre mais seulement à quelques longueurs d'onde prédéterminées.

Pour des applications de mesure de profil d'échantillons en couches minces, il est souhaitable de disposer d'un appareil SDL ayant à la fois une résolution temporelle élevée et permettant d'acquérir un plus grand nombre de longueurs d'onde qu'un appareil SDL à polychromateur équipé de PMs.

Certains échantillons sont de composition inconnue. La détermination des longueurs d'onde où positionner les PMs requiert alors une étude préalable. Il est donc souhaitable d'acquérir des spectres d'émission optique sur une gamme spectrale la plus étendue possible et avec une résolution spectrale élevée, pour permettre la détection de toutes les espèces chimiques entrant dans la composition de l'échantillon, sans les connaître à l'avance.

Le document US 10746598 B2 divulgue un exemple de l'état de la technique.

### Exposé de l'invention

A cet effet, l'invention concerne un appareil de spectrométrie de décharge luminescente selon la revendication 1.

Selon l'invention, le spectromètre optique d'émission comprend un composant optique dispersif et un réseau à échelle, le composant optique dispersif et le réseau à échelle étant disposés et configurés pour former un spectre bidimensionnel du faisceaux lumineux, le spectre bidimensionnel étant dispersé dans une pluralité d'ordres de diffraction (P1, ...Pj,...PT), la pluralité d'ordres de diffraction (P1, ...Pj,...PT) s'étendant suivant une première direction (X) et chaque ordre de diffraction (P1, ...Pj,...PT) s'étendant spectralement suivant une seconde direction (Y) transverse à la première direction (X) et un détecteur CMOS à matrice de pixels disposé et configuré pour acquérir le spectre bidimensionnel en fonction du temps.

Selon un aspect particulier et avantageux, le détecteur CMOS est apte à acquérir au moins 20 images par seconde, par exemple 30, 50 ou même 100 images par seconde.

Dans un exemple de réalisation, le détecteur CMOS comprend N lignes de M pixels, où N est supérieur ou égal à 512 et M est supérieur ou égal à 512, par exemple 1024x1024 pixels ou de préférence 2048x2048 pixels.

Selon un autre aspect particulier et avantageux, chaque ordre de diffraction (P1, ...Pj,...PT) s'étend sur une ligne du détecteur CMOS.

De façon avantageuse, l'appareil de spectrométrie de décharge luminescente comprend un système de traitement des données configuré pour traiter les signaux du détecteur CMOS par macropixels, chaque macropixel comprenant au moins 2x2 pixels adjacents du détecteur CMOS.

Selon l'invention, l'appareil de spectrométrie de décharge luminescente comprend un système optique de couplage entre la lampe à décharge luminescente et une entrée du spectromètre optique d'émission.

Selon un aspect particulier et avantageux, le composant optique dispersif comprend un prisme.

Selon l'invention, l'appareil de spectrométrie de décharge luminescente comprend un polychromateur apte à recevoir une autre partie du faisceau lumineux émis par le plasma de décharge luminescente, le polychromateur comprenant un réseau de diffraction et plusieurs détecteurs photomultiplicateurs, chaque détecteur photomultiplicateur étant adapté pour détecter une émission optique à une longueur d'onde déterminée.

De façon optionnelle, l'appareil de spectrométrie de décharge luminescente comprend un interféromètre différentiel pour mesurer une profondeur de gravure d'un cratère d'érosion dans un échantillon exposé au plasma de décharge luminescente.

L'invention concerne aussi un procédé de spectrométrie de décharge luminescente selon la revendication 9.

### Brève description des dessins

De plus, diverses autres caractéristiques de l'invention ressortent de la description annexée effectuée en référence aux dessins qui illustrent des formes, non limitatives, de réalisation de l'invention et où :
Figure 1 est une vue schématique d'un appareil de spectrométrie de décharge luminescente,
Figure 2 est une vue schématique d'un spectre bidimensionnel sur un détecteur CMOS,
Figure 3 est une vue schématique d'un système optique de couplage simultané vers un spectromètre à échelle et vers un polychromateur équipé de photomultiplicateurs selon l'invention.

Il est à noter que sur ces figures les éléments structurels et/ou fonctionnels communs aux différentes variantes peuvent présenter les mêmes références.

### Description détaillée

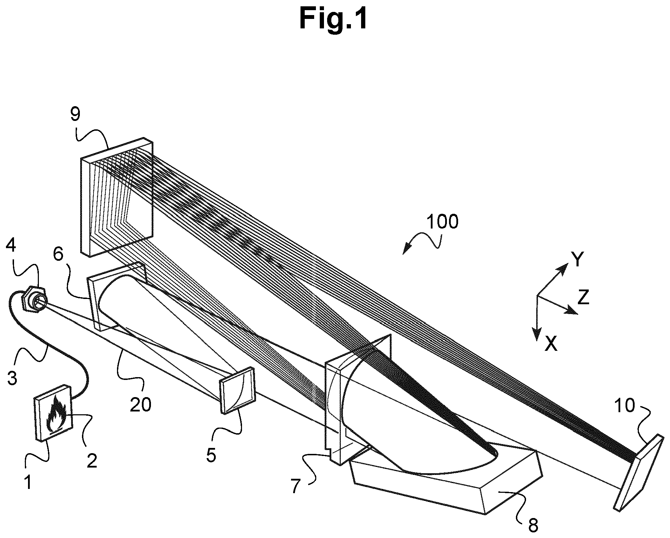

Sur la figure 1, on a représenté schématiquement une lampe à décharge luminescente 1 configurée pour former un plasma de décharge luminescente 2. De manière connue en SDL, le plasma de décharge luminescente est utilisé pour éroder la surface d'un échantillon que l'on souhaite analyser.

Le plasma de décharge luminescente 2 génère une émission optique. On collecte, par exemple via une fibre optique 3, une partie du faisceau lumineux 20 émis par le plasma 2. La fibre optique 3 permet de guider le faisceau lumineux 20 d'émission vers l'entrée 4 d'un spectromètre optique d'émission.

Dans le cas où on utilise une fibre optique 3 pour transporter le faisceau lumineux 20 vers l'entrée 4 du spectromètre, cette entrée 4 est formée par le cœur de la fibre optique. En variante, l'entrée 4 du spectromètre comprend une fente de forme allongée.

Le spectromètre optique d'émission est ici un spectromètre à échelle combiné à un détecteur CMOS 10 à matrice de pixels. Le spectromètre à échelle comprend une combinaison d'un élément optique dispersif et d'un réseau à échelle (« Echelle grating » en anglais) montés de façon à disperser spectralement le faisceau lumineux suivant deux directions transverses. De façon avantageuse, l'élément optique dispersif est un prisme monté transversalement au réseau à échelle. En variante, l'élément optique dispersif comprend un autre réseau de diffraction.

Contrairement aux systèmes classiques, le spectromètre à échelle n'est pas associé à un détecteur d'image de type CCD, mais à un détecteur d'image de type CMOS. Par exemple, le détecteur d'image CMOS comprend une caméra CMOS. La technologie de caméra CMOS permet d'enchaîner l'acquisition de spectres en 2D à une vitesse beaucoup plus élevée qu'une caméra CCD ayant le même nombre de pixels. En pratique, l'acquisition d'une image sur un détecteur CCD de 2048x2048 pixels prend environ 4 secondes, tandis que l'acquisition d'une image sur un détecteur CMOS de même nombre de pixels est quasiment instantanée, de l'ordre de 20 ms. Toutefois, les détecteurs CMOS présentent une sensibilité bien moindre que les détecteurs CCD, qui sont eux-mêmes beaucoup moins sensibles que les détecteurs photomultiplicateurs (PM). De plus, les détecteurs CMOS présentent une gamme dynamique beaucoup plus réduite que les détecteurs PM ou les détecteurs CCD. Enfin, les détecteurs CMOS ont coût élevé comparés aux détecteurs CCD.

Dans l'exemple illustré sur la figure 1, le spectromètre à échelle comprend un premier miroir 5, un deuxième miroir 6, un prisme 7, un réseau à échelle 8 et un dernier miroir 9. Plus précisément, le spectromètre à échelle est monté dans une configuration tétraédrale. Le premier miroir 5 et le deuxième miroir 6 reçoivent le faisceau lumineux 20 issu de l'entrée 4 et forment un faisceau collimaté dirigé vers le prisme 7. De façon connue, le prisme 7 disperse spectralement le faisceau lumineux suivant une direction transverse à l'arête du prisme. Le faisceau lumineux dispersé une première fois par le prisme est incident sur le réseau à échelle 8. Le réseau à échelle 8 est un réseau comprenant un ensemble de traits parallèles. Le réseau à échelle 8 reçoit le faisceau lumineux dispersé une première fois par le prisme 7. Le réseau à échelle 8 est orienté de façon à ce que la direction des traits du réseau soit perpendiculaire à l'arête du prisme 7. Le réseau à échelle 8 diffracte ainsi le faisceau lumineux dans une direction transverse à celle du prisme. Le réseau à échelle 8 sépare le faisceau lumineux dans de nombreux ordres de diffraction P₁, ...Pⱼ,...P_{T} où T est un nombre entier compris entre 2 et 100, par exemple T est égal à 30.

Le réseau à échelle 8 est un réseau métallique, qui fonctionne en réflexion. De façon avantageuse, le réseau à échelle 8 est un réseau blazé monté en autocollimation. Dans cette configuration, l'angle d'incidence sur le réseau à échelle est égal à l'angle de diffraction. De cette manière, le faisceau diffracté par le réseau à échelle repasse par le prisme 7 pour être dispersé une deuxième fois. Ce double passage à travers le prisme 7 permet une plus grande dispersion spectrale dans chaque ordre de diffraction.

Le dernier miroir 9 reçoit le faisceau dispersé spectralement dans deux directions transverses et en forme une image spectrale sur le détecteur CMOS 10. L'image spectrale est ici appelée spectre bidimensionnel 26.

La combinaison de la réflexion et de la diffraction permet d'extraire pratiquement toute l'intensité du faisceau lumineux. Le spectromètre à échelle a une très grande luminosité, autrement dit peu de pertes.

Le spectromètre à échelle est par exemple basé sur un spectromètre Aryelle 200 de la société LTB Lasertechnik Berlin GmbH, dans lequel le détecteur CCD est remplacé par un détecteur CMOS par exemple un détecteur de la gamme Prime BSI de Télédyne.

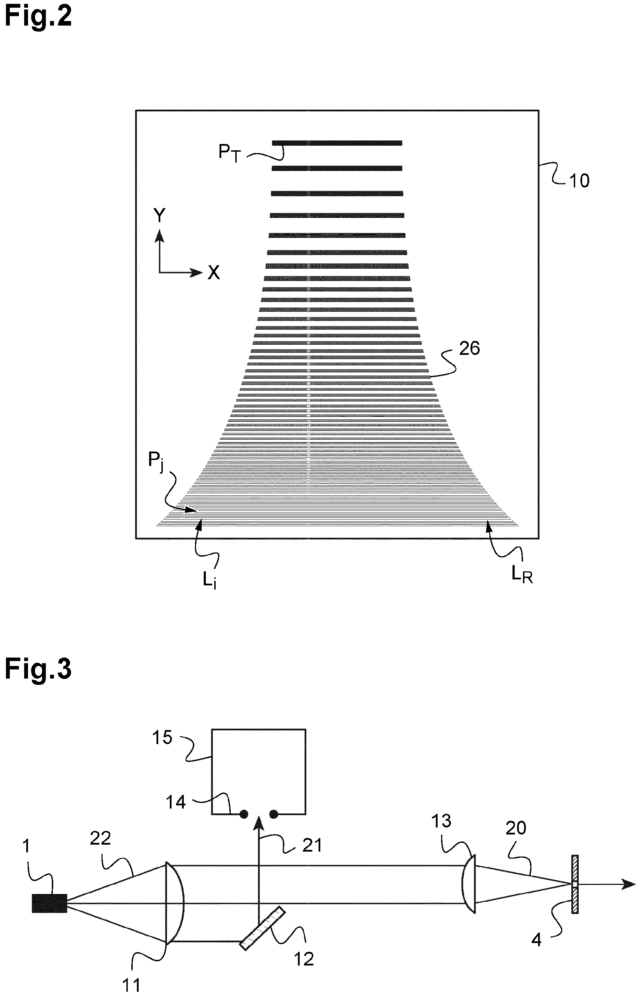

La figure 2 illustre schématiquement un spectre bidimensionnel 26 reçu sur le détecteur CMOS. Le détecteur CMOS est en général de forme carrée. Le détecteur CMOS comprend par exemple 2048 lignes et 2048 colonnes de pixels. Par exemple chaque pixel a une taille élémentaire de 6,5 µm x 6,5 µm. En variante, on accumule les signaux reçus sur un macropixel, comprenant par exemple 2x2 pixels adjacents sur 2 lignes et 2 colonnes. Un macropixel s'étend sur une surface d'environ 13 µm x 13 µm. Cette analyse par groupe de pixels (ou « binning » en anglais) permet d'augmenter la sensibilité du signal détecté d'un facteur 4, sans dégrader la résolution de l'ensemble Echelle + CMOS car dans le montage utilisé le facteur limitant la résolution n'est pas la taille des pixels mais la largeur de la fente d'entrée. Ce mode de fonctionnement par groupe de pixels est bien adapté à une source de décharge luminescente qui présente une faible luminosité. Une telle source présente peu de risque de saturer les pixels du détecteur CMOS, y compris en mode macropixel.

Le spectre bidimensionnel 26 est dispersé par le réseau à échelle en fonction des ordres de diffraction P₁, ...Pⱼ,...P_{T} dans la direction Y. Le détecteur CMOS est orienté de façon à ce que chaque ordre de diffraction s'étende sur une ligne de pixels. On observe sur la figure 2 que la distance entre les ordres n'est pas constante du fait de la dispersion du prisme. Les ordres de diffraction les plus bas P₁ et P₂ sont séparés d'une distance inférieure à la distance entre les ordres de diffraction les plus élevés P_{T-1} et P_{T}.

Dans chaque ordre de diffraction, par exemple Pj, le spectre monodimensionnel est dispersé en fonction de la longueur d'onde suivant la direction X entre une longueur d'onde basse Lᵢ et une longueur d'onde élevée L_{R}. Le spectromètre à échelle combiné au détecteur CMOS permet ainsi de mesurer simultanément et rapidement l'ensemble du spectre d'émission optique.

L'efficacité de diffraction du spectromètre à échelle est différente en fonction de la longueur d'onde dans chaque ordre de diffraction. Un système de traitement du signal permet de combiner les différents ordres détectés sur le détecteur CMOS pour reconstruire un spectre complet du faisceau lumineux à une dimension en fonction de la longueur d'onde. Le flux de données généré par le détecteur CMOS nécessite un système de traitement et/ou un algorithme particulier pour extraire un spectre complet en fonction du temps.

La rapidité d'acquisition du détecteur CMOS permet d'acquérir un spectre bidimensionnel avec une résolution temporelle de quelques millisecondes, par exemple de 10 ms ou 20 ms. Cette fréquence d'acquisition permet une analyse temporelle des signaux de SDL correspondant à une résolution en profondeur pour des couches très minces, d'épaisseur nanométrique ou de quelques nanomètres. La gravure d'une couche mince par le plasma de décharge luminescente peut être très rapide. Dans certaines applications à l'analyse de couches minces, une couche mince peut être gravée en quelques millisecondes.

Les détecteurs CMOS actuellement disponibles permettent d'acquérir les images de spectre bidimensionnel à une fréquence d'acquisition d'au moins 20 images par seconde, par exemple de 30, 50 ou même 100 images par seconde. Les images sont transférées sur un disque dur pour être traitées ultérieurement.

Le spectromètre à échelle présente de nombreux avantages. Il est compact et aisé à coupler à une lampe à décharge luminescente. Il ne comporte pas de pièce mobile ce qui le rend très robuste. Le spectromètre à échelle est généralement calibré en usine, par exemple en utilisant une lampe à vapeur de mercure émettant des raies lumineuses à des longueurs d'onde très précises. Il permet d'obtenir à chaque image spectrale détectée, un spectre continu sur une très large gamme spectrale, par exemple de 203 nm à 800 nm. La résolution optique n'est pas constante avec un spectromètre à échelle : par exemple on obtient une résolution spectrale à peu près comparable à celle du polychromateur dans la GD, soit environ 20-25pm vers 220nm et environ 50pm dans le rouge. L'absorption de la fibre optique 3 et du prisme 7 limitent la transmission dans l'UV. Pour pouvoir obtenir des résultats dans l'UV, il est nécessaire d'utiliser une fibre optique transparente dans l'UV ou de coupler directement le spectromètre sur la lampe à décharge. La détection d'un spectre continu sur une large gamme spectrale permet de détecter des éléments a priori non prévus dans l'échantillon à analyser.

Grâce à sa compacité, le spectromètre à échelle combiné à un détecteur CMOS peut aisément être installé sur un appareil de spectrométrie de décharge luminescente existant.

L'appareil de spectrométrie de décharge luminescente basé sur un spectromètre à échelle et un détecteur CMOS trouve de nombreuses applications dans l'analyse du profil d'échantillons en couches minces. Par exemple, la présente divulgation peut être appliquée à l'analyse de disques durs formés d'empilements de plusieurs couches minces, par exemple de couches photovoltaïques, de dépôts électrolytiques ou de dépôts CVD ou PVD.

La figure 3 représente un système optique de couplage entre une lampe à décharge luminescente 2 et d'une part l'entrée 14 d'un polychromateur 15 et d'autre part l'entrée 4 du spectromètre à échelle équipé d'un détecteur CMOS. Une lentille 11 collimate le faisceau lumineux 22 émis par le plasma de décharge luminescente dans la lampe à décharge 1. Un miroir 12 est placé sur une moitié du faisceau lumineux collimaté pour dévier cette moitié du faisceau lumineux 21 vers l'entrée d'un polychromateur. L'autre moitié du faisceau lumineux 20 se propage jusqu'à une autre lentille 13 qui focalise cette autre moitié du faisceau lumineux sur l'entrée 4 du spectromètre à échelle équipé d'un détecteur CMOS. Bien que le flux lumineux soit divisé en deux sur chaque système de détection, ce couplage optique présente de nombreux avantages.

Un tel système optique de couplage permet de détecter et de suivre simultanément des raies d'émission prédéterminées via le polychromateur 15 équipé de détecteurs photomultiplicateurs munis chacun d'une fente, et d'autre part le spectre complet détecté via le détecteur CMOS 10 du spectromètre à échelle. En particulier, le polychromateur 15 permet de suivre des raies d'émission dans l'ultraviolet qui sont plus difficiles à détecter sur le spectromètre à échelle du fait de la présence du prisme 7. Un polychromateur permet aussi de résoudre spectralement des raies d'émission complexes. De façon avantageuse, les systèmes électroniques d'acquisition du polychromateur et du spectromètre à échelle combiné au détecteur CMOS sont compatibles. Par exemple, le polychromateur muni de détecteurs photomultiplicateurs permet d'acquérir des raies d'émission à une fréquence comprise entre 1 Hz et 100 Hz. Les données acquises par les deux types de détecteurs, respectivement PM et CMOS, sont transférées à un système informatique de traitement.

On obtient ainsi un appareil de spectrométrie de décharge luminescente hybride, c'est-à-dire avec deux types de détecteurs : des PM en sortie du polychromateur et un détecteur imageur CMOS en sortie du spectromètre à échelle. La combinaison de ces deux systèmes de détection à la même lampe à décharge luminescente permet d'acquérir des données de manière synchronisée et de tirer profit des avantages de chaque système de détection. De façon avantageuse, la vitesse d'acquisition des PM est ajustée pour être identique à celle du détecteur CMOS. Les détecteurs PM et CMOS sont rapides, et permettent donc une résolution temporelle élevée. Le polychromateur, par exemple en montage de Pashen-Runge, muni de PM permet une détection jusque dans l'UV, pour suivre des raies d'émission à une longueur d'onde déterminée avec précision. L'asservissement en haute tension de chaque PM évite la saturation des détecteurs PM. Les détecteurs PM bénéficient ainsi d'une très grande dynamique de mesure qui peut s'adapter quelle que soit l'intensité des signaux détectés. Toutefois, le nombre de PM étant limité et la position de chaque PM étant fixe, le polychromateur ne permet de suivre que certaines raies présélectionnées. Le détecteur CMOS présente une dynamique de mesure plus limitée que les PM, mais il permet l'acquisition d'un spectre complet sur une gamme spectrale continue et relativement étendue, par exemple de 200 nm à 800 nm. De cette manière, le détecteur CMOS permet de détecter certaines raies d'émission qui n'étaient pas prévues à l'avance. De plus, le détecteur CMOS permet de détecter plusieurs raies associées à un même élément chimique, ce qui permet de détecter certains éléments présents à l'état de trace dans l'échantillon analysé.

L'appareil de spectrométrie de décharge luminescente hybride de la présente divulgation trouve de nouvelles applications pour l'analyse de nombreux matériaux et composés solides. Le polychromateur permet de suivre des raies dans l'ultraviolet qui sont plus difficiles à détecter via le spectromètre à échelle et le détecteur CMOS. Par exemple, le polychromateur permet de résoudre les raies d'émission optique de l'hydrogène et du deutérium situées autour de 120nm qui sont mesurées soit séquentiellement, soit au moyen de deux fentes placées dans deux ordres de diffraction différents. Le spectromètre à échelle combiné au détecteur CMOS ne permet pas d'atteindre l'UV lointain.

L' appareil de spectrométrie de décharge luminescente de la présente divulgation est compatible avec l'utilisation d'un système interférométrique de type interféromètre différentiel pour mesurer la profondeur du cratère d'érosion dans l'échantillon lors de son exposition au plasma de gravure, comme décrit dans le brevet FR1453997.

## Revendications

1. Appareil de spectrométrie de décharge luminescente comprenant une lampe (1) à décharge luminescente apte à former un plasma (2) de décharge luminescente, une lentille (11) disposée pour collimater un faisceau lumineux émis par le plasma de décharge luminescente, un miroir (12) placé sur une moitié du faisceau lumineux collimaté pour dévier cette moitié du faisceau lumineux (21) collimaté, un spectromètre optique d'émission, un système de traitement du signal, et une autre lentille (13) disposée pour focaliser une autre moitié du faisceau lumineux collimaté sur une entrée (4) du spectromètre optique d'émission, le spectromètre optique d'émission étant disposé pour recevoir l'autre moitié du faisceau lumineux (20) émis par le plasma de décharge luminescente, le spectromètre optique d'émission comprenant un composant optique dispersif (7) et un réseau à échelle (8), le composant optique dispersif (7) et le réseau à échelle (8) étant disposés et configurés pour former un spectre bidimensionnel (26) du faisceaux lumineux, le spectre bidimensionnel (26) étant dispersé dans une pluralité d'ordres de diffraction (P₁, ...Pⱼ,...P_{T}), la pluralité d'ordres de diffraction (P₁, ...Pⱼ,...P_{T}) s'étendant suivant une première direction (X) et chaque ordre de diffraction (P₁, ...Pⱼ,...P_{T}) s'étendant spectralement suivant une seconde direction (Y) transverse à la première direction (X) et un détecteur CMOS (10) à matrice de pixels disposé et configuré pour acquérir le spectre bidimensionnel (26) en fonction du temps, le système de traitement du signal étant adapté pour combiner le spectre bidimensionnel (26) dispersé dans la pluralité d'ordres de diffraction (P1, ...Pj,...PT) et pour extraire un spectre complet du faisceau lumineux à une dimension sur une gamme spectrale, l'appareil comprenant un polychromateur (15) disposé pour recevoir la moitié du faisceau lumineux (21) émis par le plasma de décharge luminescente et déviée par le miroir (12), le polychromateur (15) comprenant un réseau de diffraction et plusieurs détecteurs photomultiplicateurs, chaque détecteur photomultiplicateur étant adapté pour détecter une émission optique à une longueur d'onde déterminée.

2. Appareil de spectrométrie de décharge luminescente selon la revendication 1 dans lequel le détecteur CMOS est apte à acquérir au moins 20 images par seconde.

3. Appareil de spectrométrie de décharge luminescente selon la revendication 1 ou 2 dans lequel le détecteur CMOS comprend N lignes de M pixels, où N est supérieur ou égal à 512 et M est supérieur ou égal à 512.

4. Appareil de spectrométrie de décharge luminescente selon l'une des revendication 1 à 3 dans lequel chaque ordre de diffraction (P₁, ...Pⱼ,...P_{T}) s'étend sur une ligne du détecteur CMOS.

5. Appareil de spectrométrie de décharge luminescente selon l'une des revendication 1 à 4 comprenant un système de traitement des données configuré pour traiter les signaux du détecteur CMOS par macropixels, chaque macropixel comprenant au moins 2x2 pixels adjacents du détecteur CMOS.

6. Appareil de spectrométrie de décharge luminescente selon l'une des revendication 1 à 5 comprenant un système optique de couplage entre la lampe (1) à décharge luminescente et une entrée (4) du spectromètre optique d'émission.

7. Appareil de spectrométrie de décharge luminescente selon l'une des revendication 1 à 6 dans lequel le composant optique dispersif (7) comprend un prisme.

8. Appareil de spectrométrie de décharge luminescente selon l'une des revendication 1 à 7 comprenant un interféromètre différentiel pour mesurer une profondeur de gravure d'un cratère d'érosion dans un échantillon exposé au plasma (2) de décharge luminescente.

9. Procédé de spectrométrie de décharge luminescente comprenant les étapes suivantes :
- former un plasma de décharge luminescente ;
- collimater un faisceau lumineux émis par le plasma de décharge luminescente ;
- disposer un miroir (12) sur une moitié du faisceau lumineux collimaté pour dévier cette moitié du faisceau lumineux (21) collimaté ;
- recevoir et focaliser une autre moitié du faisceau lumineux (20) collimaté sur une entrée (4) d'un spectromètre optique d'émission ;
- disperser spectralement l'autre moitié du faisceau lumineux sur un réseau à échelle (8) et un composant optique dispersif (7) pour former un spectre bidimensionnel, le spectre bidimensionnel étant dispersé dans une pluralité d'ordres de diffraction (P₁, ...Pⱼ,...P_{T}), la pluralité d'ordres de diffraction (P₁, ...Pⱼ,...P_{T}) s'étendant suivant une première direction (X) et chaque ordre de diffraction (P₁, ...Pⱼ,...P_{T}) s'étendant spectralement suivant une direction transverse à la première direction ; et
- acquérir le spectre bidimensionnel sur un détecteur CMOS à matrice de pixels en fonction du temps ;
- appliquer un traitement du signal adapté pour combiner le spectre bidimensionnel dispersé dans la pluralité d'ordres de diffraction (P1, ...Pj,...PT) et pour extraire un spectre complet du faisceau lumineux à une dimension sur une gamme spectrale, et
- recevoir la moitié du faisceau lumineux émis par le plasma de décharge luminescente et déviée par le miroir (12) sur un polychromateur, équipé de plusieurs détecteurs photomultiplicateurs ;
- détecter via chaque détecteur photomultiplicateur une émission optique à une longueur d'onde déterminée.

## Patentansprüche

1. Glimmentladungsspektrometriegerät mit einer Glimmentladungslampe (1), die dazu ausgelegt ist, ein Glimmentladungsplasma (2) zu erzeugen, einer Linse (11), die so angeordnet ist, daß sie einen vom Glimmentladungsplasma ausgesandten Lichtstrahl parallel ausrichtet, einem Spiegel (12), der auf einer Hälfte des parallel ausgerichteten Lichtstrahls angeordnet ist, um diese Hälfte des parallel ausgerichteten Lichtstrahls (21) abzuleiten, einem optischen Emissionsspektrometer, einem Signalverarbeitungssystem und einer weiteren Linse (13), die so angeordnet ist, daß eine andere Hälfte des parallel ausgerichteten Lichtstrahls auf einen Eingang (4) des optischen Emissionsspektrometers fokussiert wird, wobei das optische Emissionsspektrometer so angeordnet ist, daß es die andere Hälfte des von der Plasmaglimmentladung ausgesandten Lichtstrahls (20) empfängt, wobei das optische Emissionsspektrometer ein optisches dispergierendes Bauelement (7) und ein Echelle-Gitter (8) aufweist, wobei das optische dispergierende Bauelement (7) und das Echelle-Gitter (8) dazu angeordnet und ausgelegt sind, ein zweidimensionales Spektrum (26) des Lichtstrahls zu bilden, wobei das zweidimensionale Spektrum (26) in eine Vielzahl von Beugungsordnungen (P₁, ..., Pⱼ, ..., P_{T}) zerteilt wird, wobei sich die Vielzahl von Beugungsordnungen (P₁, ..., Pⱼ, ..., P_{T}) in einer ersten Richtung (X) erstreckt und sich jede Beugungsordnung (P₁, ..., Pⱼ, ..., P_{T}) spektral in einer zur ersten Richtung (X) senkrechten zweiten Richtung (Y) erstreckt, und einem CMOS-Sensor (10) mit Pixelmatrix, der dazu angeordnet und ausgelegt ist, das zweidimensionale Spektrum (26) zeitabhängig aufzunehmen, wobei das Signalverarbeitungssystem dazu ausgelegt ist, das in die Vielzahl von Beugungsordnungen (P₁, ..., Pⱼ, ..., P_{T}) gestreute zweidimensionale Spektrum (26) zu kombinieren und ein komplettes eindimensionales Spektrum des Lichtstrahls über einen Spektralbereich herauszuziehen, wobei das Gerät einen Polychromator (15) aufweist, der dazu angeordnet ist, die vom Glimmentladungsplasma ausgesandte und vom Spiegel (12) umgeleitete Hälfte des Lichtstrahls (21) aufzunehmen, wobei der Polychromator (15) ein Streugitter und mehrere Photomultiplikatorsensoren aufweist, wobei jeder Photomultiplikatorsensor dazu ausgelegt ist, eine optische Ausstrahlung bei einer bestimmten Wellenlänge zu erfassen.

2. Glimmentladungsspektrometriegerät gemäß Anspruch 1, bei dem der CMOS-Sensor dazu geeignet ist, mindestens 20 Bilder pro Sekunde zu erfassen.

3. Glimmentladungsspektrometriegerät gemäß Anspruch 1 oder 2, bei dem der CMOS-Sensor N Zeilen mit M Pixeln aufweist, wobei N größer als oder gleich 512 und M größer als oder gleich 512 ist.

4. Glimmentladungsspektrometriegerät gemäß einem der Ansprüche 1 bis 3, bei dem sich jede Beugungsordnung (P₁, ..., Pⱼ, ..., P_{T}) über eine Zeile des CMOS-Detektors erstreckt.

5. Glimmentladungsspektrometriegerät gemäß einem der Ansprüche 1 bis 4 mit einem System zum Verarbeiten der Daten, das dazu ausgelegt ist, die Signale des CMOS-Detektors pro Makropixel zu verarbeiten, wobei jedes Makropixel mindestens 2x2 nebeneinanderliegende Pixel des CMOS-Detektors aufweist.

6. Glimmentladungsspektrometriegerät gemäß einem der Ansprüche 1 bis 5 mit einem optischen Kopplungssystem zwischen der Glimmentladungslampe (1) und einem Eingang (4) des optischen Emissionsspektrometers.

7. Glimmentladungsspektrometriegerät gemäß einem der Ansprüche 1 bis 6, bei dem das optische dispergierende Bauelement (7) ein Prisma aufweist.

8. Glimmentladungsspektrometriegerät gemäß einem der Ansprüche 1 bis 7 mit einem Differentialinterferometer zum Messen einer Gravurtiefe eines Erosionskraters in einer dem Glimmentladungsplasma (2) ausgesetzten Probe.

9. Glimmentladungsspektrometrieverfahren mit den folgenden Schritten:
- eine Plasmaglimmentladung bilden,
- einen vom Glimmentladungsplasma ausgesandten Lichtstrahl parallel ausrichten,
- einen Spiegel (12) auf eine Hälfte des parallel ausgerichteten Lichtstrahls (20) setzen, um diese Hälfte des parallel ausgerichteten Lichtstrahls (21) abzuleiten,
- eine andere Hälfte des parallel ausgerichteten Lichtstrahls (20) empfangen und auf einen Eingang (4) eines optischen Emissionsspektrometers fokalisieren,
- die andere Hälfte des Lichtstrahls auf ein optisches dispergierendes Bauelement (7) und ein Echelle-Gitter (8) spektral streuen, um ein zweidimensionales Spektrum zu bilden, wobei das zweidimensionale Spektrum in eine Vielzahl von Beugungsordnungen (P₁, ..., Pⱼ, ..., P_{T}) zerteilt wird, wobei sich die Vielzahl von Beugungsordnungen (P₁, ..., Pⱼ, ..., P_{T}) in einer ersten Richtung (X) erstreckt und sich jede Beugungsordnung (P₁, ..., Pⱼ, ..., P_{T}) spektral in einer zur ersten Richtung senkrechten zweiten Richtung erstreckt, und
- das zweidimensionale Spektrum in Abhängigkeit von der Zeit auf einem CMOS-Detektor mit Pixelmatrix erfassen,
- eine Signalverarbeitung anwenden, die dazu ausgelegt ist, das in die Vielzahl von Beugungsordnungen (P₁, ..., Pⱼ, ..., P_{T}) gestreute zweidimensionale Spektrum zu kombinieren und ein komplettes eindimensionales Spektrum des Lichtstrahls über einen Spektralbereich herauszuziehen, und
- die vom Glimmentladungsplasma ausgesandte und vom Spiegel (12) umgeleitete Hälfte des Lichtstrahls mit einem Polychromator erfassen, der mit mehreren Photomultiplikatorsensoren ausgestattet ist,
- über jeden Photomultiplikatorsensor eine optische Ausstrahlung bei einer bestimmten Wellenlänge erfassen.

## Claims

1. A glow discharge spectrometry device comprising a glow discharge lamp (1) adapted to form a glow discharge plasma (2), a lens (11) arranged for collimating a light beam (20) emitted by the glow discharge plasma, a mirror (12) placed on a half of the collimated light beam to deviate this half of the collimated light beam (21), an optical emission spectrometer, a signal processing system, and another lens (13) arranged to focus an other half of the light beam to an input (4) of the optical emission spectrometer, the optical emission spectrometer being arranged to receive the other part of the light beam (20) emitted by the glow discharge plasma, the optical emission spectrometer comprising a dispersive optical component (7) and an echelle grating (8), the dispersive optical component (7) and the echelle grating (8) being arranged and configured to form a two-dimensional spectrum (26) of the light beam, the two-dimensional spectrum (26) being dispersed into a plurality of diffraction orders (P₁, ...Pⱼ,...P_{T}), the plurality of diffraction orders (P₁, ...Pⱼ,...P_{T}) extending along a first direction (X) and each diffraction order (P₁, ...Pⱼ,...P_{T}) extending spectrally along a second direction (Y) transverse to the first direction (X), and a pixel-array CMOS sensor (10) arranged and configured to acquire the two-dimensional spectrum (26) as a function of time, the signal processing system being adapted to combine the two-dimensional spectrum (26) dispersed into the plurality of diffraction orders (P₁, ...Pⱼ,...P_{T}) and to extract a complete one-dimensional spectrum over a spectral range, the device comprising a polychromator (15) adapted to receive the half of the light beam (21) emitted by the glow discharge plasma and deviated by the mirror (12), the polychromator (15) comprising a diffraction grating and several photomultiplier sensors, each photomultiplier sensor being adapted to detect an optical emission at a determined wavelength.

2. The glow discharge spectrometry device according to claim 1, wherein the CMOS sensor is adapted to acquire at least 20 frames per second.

3. The glow discharge spectrometry device according to claim 1 or 2, wherein the CMOS sensor comprises N rows of M pixels, where N is higher than or equal to 512 and M is higher than or equal to 512.

4. The glow discharge spectrometry device according to any one of claims 1 to 3, wherein each diffraction order (P₁, ...Pⱼ,...P_{T}) extends along a row of the CMOS sensor.

5. The glow discharge spectrometry device according to any one of claims 1 to 4, comprising a data processing system configured to process the CMOS sensor signals on a macropixel basis, each macropixel comprising at least 2x2 adjacent pixels of the CMOS sensor.

6. The glow discharge spectrometry device according to any one of claims 1 to 5, comprising an optical coupling system between the glow discharge lamp (1) and an input (4) of the optical emission spectrometer.

7. The glow discharge spectrometry device according to any one of claims 1 to 6, wherein the dispersive optical component (7) comprises a prism.

8. The glow discharge spectrometry device according to any one of claims 1 to 7, comprising a differential interferometer to measure an etching depth of an erosion crater in a sample exposed to the glow discharge plasma (2).

9. A glow discharge spectrometry method comprising the following steps:
- forming a glow discharge plasma;
- collimating a light beam (20) emitted by the glow discharge plasma;
- placing a mirror (12) on a half of the collimated light beam to deviate this half of the collimated light beam (21),
- receiving and focusing an other half of the collimated light beam (20) at an input (4) of an optical emission spectrometer;
- spectrally dispersing the other half of the light beam over an echelle grating (8) and a dispersive optical component (7) to form a two-dimensional spectrum, the two-dimensional spectrum being dispersed into a plurality of diffraction orders (P₁, ...Pⱼ,...P_{T}), the plurality of diffraction orders (P₁, ...Pⱼ,...P_{T}) extending along a first direction (X) and each diffraction order (P₁, ...Pⱼ,...P_{T}) extending spectrally along a direction transverse to the first direction; and
- acquiring the two-dimensional spectrum on a pixel-array CMOS sensor as a function of time;
- applying a signal processing adapted to combine the two-dimensional spectrum (26) dispersed into the plurality of diffraction orders (P₁, ...Pⱼ,...P_{T}) and to extract a complete one-dimensional spectrum over a spectral range, and
- receiving the half of the light beam (21) emitted by the glow discharge plasma and deviated by the mirror (12) on a polychromator (15), equipped with several photomultiplier sensors;
- detecting via each photomultiplier sensor an optical emission at a determined wavelength.
